(19) Europäisches Patentamt
European Patent Office
Office européen des brevets

(11) **EP 2 960 679 B1**

(12) **EUROPEAN PATENT SPECIFICATION**

(45) Date of publication and mention
of the grant of the patent:
**16.03.2022 Bulletin 2022/11**

(21) Application number: **15177756.2**

(22) Date of filing: **30.01.2014**

(51) International Patent Classification (IPC):
*G01V 1/16* (2006.01)  *G01V 1/18* (2006.01)
*G01V 1/28* (2006.01)

(52) Cooperative Patent Classification (CPC):
**G01V 1/284; G01V 1/184;** G01V 1/166

(54) **COMPUTING ROTATION DATA USING A GRADIENT OF TRANSLATIONAL DATA**

BERECHNUNG VON ROTATIONSDATEN UNTER VERWENDUNG EINES GRADIENTEN TRANSLATIONALER DATEN

CALCUL DE DONNÉES DE ROTATION À L'AIDE D'UN GRADIENT DE DONNÉES DE TRANSLATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2013 US 201361759466 P**
**17.01.2014 US 201414158115**

(43) Date of publication of application:
**30.12.2015 Bulletin 2015/53**

(62) Document number(s) of the earlier application(s) in accordance with Art. 76 EPC:
**14746018.2 / 2 951 618**

(73) Proprietors:
• **WesternGeco, L.L.C.**
**Houston, TX 77042 (US)**
Designated Contracting States:
**IS**
• **WesternGeco Seismic Holdings Limited**
**Road Town, Tortola (VG)**

(72) Inventors:
• **Goujon, Nicolas**
**1383 Asker (NO)**
• **Edme, Pascal**
**Cambridge, Cambridgeshire CB3 0EL (GB)**
• **Kashubin, Artem**
**Gatwick, West Sussex RH6 0NZ (GB)**
• **Muijzert, Everhard**
**Cambridge, Cambridgeshire CB3 0EL (GB)**

(74) Representative: **Schlumberger Intellectual Property Department**
**Parkstraat 83**
**2514 JG Den Haag (NL)**

(56) References cited:
**KR-A- 20110 042 276    US-A- 4 300 220**
**US-A- 5 214 614**

**Description**

BACKGROUND

Seismic surveying is used for identifying subterranean elements of interest, such as hydrocarbon reservoirs, freshwater aquifers, gas injection zones, and so forth. In seismic surveying, seismic sources are activated to generate seismic waves directed into a subterranean structure.

The seismic waves generated by a seismic source travel into the subterranean structure, with a portion of the seismic waves reflected back to the surface for receipt by seismic sensors (e.g., geophones, accelerometers, etc.). These seismic sensors produce signals that represent detected seismic waves. Signals from the seismic sensors are processed to yield information about the content and characteristics of the subterranean structure.

A land-based seismic survey arrangement can include a deployment of an array of seismic sensors on the ground. A marine survey arrangement can include placing a seabed cable or other arrangement of seismic sensors on the seafloor.

KR 20110042276 refers to use of a multi-axis, multi-function MEMS sensors for use in a small cylindrical housing inside a sensor body. The sensors function as particle motion sensors, are configured so that they are co-axial along one of the three axes and spaced apart from one another along the co-axial axis, and measure translational data along three orthogonal axes.

US 4,300,220 describes a detector that utilizes three seismometers to detect three components of particle motion waves.

SUMMARY

The present invention resides in a seismic sensor system as defined in claim 1 and in a method of seismic surveying seismic data as defined in claim 8.

Other features will become apparent from the following description, from the drawings, and from the claims.

BRIEF DESCRIPTION OF THE DRAWINGS

Some embodiments are described with respect to the following figures.

Fig. 1 is a schematic diagram of a sensor device according to some implementations.

Figs. 2A-2C are schematic diagrams of a sensor device according to various implementations.

Fig. 3 is a schematic diagram of a sensor device partially buried in a hole, according to some implementations.

Fig. 4 is a schematic diagram of a sensor device according to further implementations.

Fig. 5 is a flow diagram of a process according to some implementations.

Fig. 6 is a schematic diagram of an example survey arrangement including sensor devices according to some implementations.

DETAILED DESCRIPTION

In seismic surveying (marine or land-based seismic surveying), seismic sensors are used to measure seismic data, such as displacement, velocity, or acceleration. Seismic sensors can include geophones, accelerometers, microelectromechanical systems (MEMS) sensors, or any other type of sensors that measure translational motion of the surface in one or more directions. In the ensuing discussion, a seismic sensor that measures translational motion is referred to as a particle motion sensor. A particle motion sensor can refer to any of the sensors listed above.

An arrangement of particle motion sensors can be provided at (or proximate) a ground surface or earth surface to measure seismic waves reflected from a subterranean structure, in response to seismic waves (or impulses) produced by one or more seismic sources and propagated into an earth subsurface. As described herein a ground surface and/or earth surface is any land surface or bottom surface of a body of water, such as a seafloor, lake floor or wetland. A particle motion sensor provided at a ground surface can refer to a particle motion sensor that is placed in contact with the ground surface, partially buried in the ground surface, or completely buried in the ground surface up to a predetermined depth (e.g., up to a depth of less than 5 meters). A particle motion sensor at (or proximate) the earth surface can record the vectorial part of an elastic wavefield just below the free surface (*i.e.,* ground surface).

In addition to measuring translational data, it may be useful to obtain rotation data when performing survey data acquisition for various purposes. For example, rotation data can be combined with translational data measured by particle motion sensors to eliminate or attenuate noise from the measured translational data. Examples of noise include ground-roll noise or another type of noise (such as ambient noise) that can travel along the earth's surface. Ground-roll noise can be produced by a seismic source or other source, such as cars, engines, pumps, and natural phenomena such as wind and ocean waves. The ground-roll noise travels generally horizontally along an earth surface towards seismic receivers. The horizontally traveling seismic waves, such as Rayleigh waves or Love waves, are undesirable components that can contaminate seismic survey data.

Although reference is made to using rotation data to attenuate noise, it is noted that rotation data can be used for other purposes, whether in the context of a land-based survey acquisition or marine-based survey acquisition in which a seabed cable or other arrangement of seismic sensors is placed on the seafloor. For example, rotation data and translational data can be used in performing various seismic data processing algorithms, including, among others, wavefield interpolation, wavefield extrapolation, wavefield reconstruction, wavefield regularization, P- and S-wave separation, apparent velocity estimation, near-surface characterization, seismic sensor calibration, and seismic imaging.

Wavefield interpolation refers to estimating (interpolating) wavefields at locations where seismic sensors are not provided. P- and S-wave separation refers to separating compressional (P) waves from shear (S) waves in measured seismic survey data. Apparent velocity estimation refers to estimating a characteristic of the seismic wavefield known as ray parameter or horizontal slowness, from which seismic wave velocities at various points in a subterranean structure can be retrieved. Near-surface characterization refers to estimating the shallow earth elastic properties. Seismic sensor calibration refers to calibrating a seismic sensor to compensate for any non-ideal characteristic of the seismic sensor.

Rotation data refers to a rate of rotation (or change in rotation over time) about a specific axis, such as about the x axis (which can also be referred to as a horizontal inline axis) and/or about the y axis (which can also be referred to as a horizontal crossline axis). In accordance with some implementations, rotation data can be derived based on translational data measured by particle motion sensors. In this way, a separate rotational sensor would not have to be provided in survey equipment for the purpose of measuring rotation data.

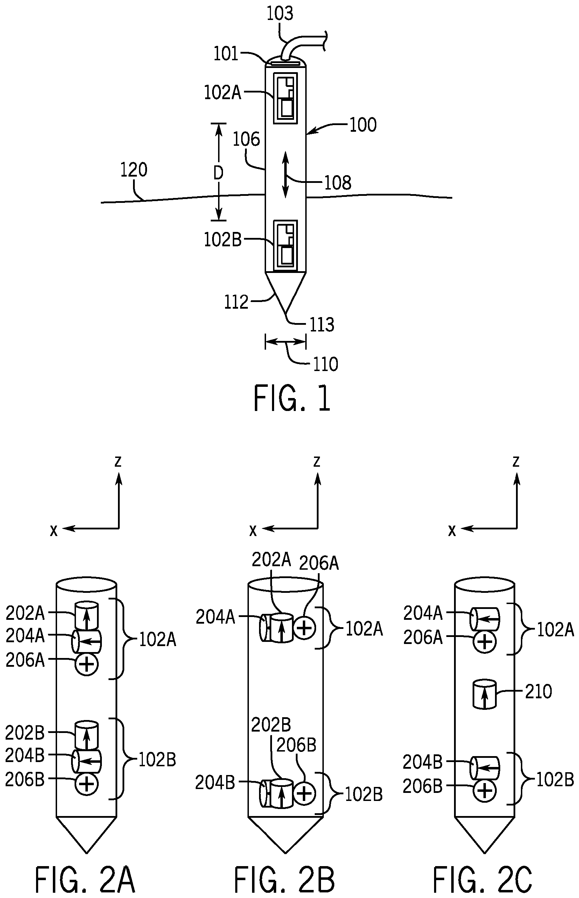

Fig. 1 depicts an example seismic sensor device 100 that includes a first sensor component 102A and a second sensor component 102B. The sensor components 102A and 102B are included inside a single housing 106 of the sensor device 100. The seismic sensor device 100 can also include a power source, such as a battery, a solar cell, and so forth. In manufacturing the seismic sensor device 100, the housing 106 can be sealed to protect the sensor components 102A and 102B.

The housing 106 generally has an elongated shape that allows the sensor components 102A and 102B to be spaced apart along a longitudinal axis 108, by a distance D, of the sensor device 100. In some implementations, the sensor components 102A and 102B are co-axial along the longitudinal axis of the housing 106. The elongated housing 106 can be in the form of a hollow tube, stick, or other elongated structure. The longitudinal axis 108 is the axis along a dimension of the sensor device 100 which is longer than other dimensions of the sensor device 100, such as a width dimension 110 or a depth dimension (not shown) that corresponds to a thickness of the housing 106.

The sensor device 100 having the elongated housing 106 can be referred to as a spike-shaped sensor device.

The housing 106 can be made out of a material, such as plastic, metal, and so forth. According to an example embodiment, the housing 106 may not resonate within a bandwidth of interest for target signals to be measured. In some examples, the bandwidth of interest can be in the range between 1 to 250 Hertz (Hz). In other examples, the housing 106 may exhibit resonance; in such examples, the resonance can be removed by processing, or the resonance can be compensated for by processing.

By arranging the sensor components 102A and 102B in the elongated housing 106 as shown in Fig. 1, the sensor components 102A and 102B are spaced apart along just the longitudinal axis 108. In other words, in some implementations, the sensor device 100 does not include sensor components that are spaced apart in any other direction (other than a direction parallel to the longitudinal axis).

Fig. 1 shows a portion of the sensor device 100 (not to scale) being below the ground surface 120, and a portion of the sensor device 100 being above the ground surface 120. According to an embodiment, the configuration can include a sensor 102B below the ground surface and a sensor 102A above the ground surface. A sensor can also be positioned at or proximate the ground surface 120. According to an embodiment, a majority of the sensor device 100 can be below the ground surface 120. According to another embodiment a majority of the sensor device 100 can be above the ground surface 120. Another embodiment can have approximately half the sensor device 100 above and half the sensor device 100 below the ground surface 120. Another embodiment can have all of the sensor devices 100 (or essentially all the sensor devices 100) below the ground surface 120.

In some examples, to obtain rotation data with respect to a horizontal axis at a ground surface 120, two vertically spaced horizontal orientated particle motion sensors can be provided in the sensor device 100. The sensor device 100 can then be vertically arranged at or near the ground surface 120. It should be understood that additional sensors to 102A and 102B can be located along the length of the sensor device 100 to provide redundancy for failed sensors and/or additional measurements.

The sensor device 100 can include a communication interface circuit 101, which is connected to a communications medium 103 *(e.g.,* electrical cable, fiber optic cable, etc.,). The communications medium 103 can be a wireless medium over which data can be communicated. The communication interface circuit 101 is connected to the sensor components 102A and 102B. Data acquired by the sensor components 102A and 102B are transferred to the communication interface circuit 101, which in turn transmits the acquired data over the communications medium 103 to a remote station, which can be a recording station, a computer, and so forth. According to other embodiments, a memory can be provided and incorporated with the sensor device 100. The memory can also be separate from the sensor device 100 and connected by wire, or short range wireless technology such as Wi-Fi or Bluetooth. An arrangement where memory is included can be referred to in the commercial art as a "blind" node arrangement. In this "blind" node arrangement, a communications interface circuit 101 may not have to be present. It should also be appreciated that a combination of a "blind" node arrangement and a wired node and/or a wireless node arrangement can be used.

In further implementations, the sensor device 100 may contain a sensing element (or sensing elements) to measure a tilt and/or an azimuth of the sensor device 100, where tilt is measured with respect to the z axis. This sensing element(s) can be part of the sensor components 102A and 102B that measure translation and rotation. For example, if the sensor components 102A and 102B include MEMS accelerometers that measure down to DC, then the MEMS accelerometers can provide tilt data. If the sensor components 102A and 102B include geophones, then a tilt meter can be added. An azimuth sensor (e.g., magnetometer, compass) can be added, so that measured horizontal components (e.g., translational data or rotation data in the x or *y* axis) can be rotated with respect to a global reference. If an azimuth sensor is not provided, then the sensor device 100 can be oriented azimuthally to a predefined azimuth when the sensor device 100 is planted.

Also, control circuitry (not shown) can be included in the sensor device 100 to control the particle motion sensors. Additionally, an analog-to-digital converter and other components may be included, such as in the communication interface circuit 101, to convert signals measured by the particle motions sensors into digital form. The components in the sensor device 100 may be powered by a battery, a solar panel, or through a wired or wireless connection.

The bottom portion of the sensor device 100 may include a spike 112 for driving the sensor device 100 into the ground surface 120. The spike 112 has a generally sharp tip 113 that allows for easier insertion of the sensor device 100 into the ground surface 120 to form a connection between the earth and the sensor device 100. A user or machine can push the spike 112 into the ground surface 120 to cause at least a portion of the sensor device 100 to be buried in the earth beneath the ground surface 120. For example, the sensor device 100 can be driven into the ground surface using a hammer, either by a user or in an automated manner by a machine. In different examples, the sensor device 100 can be screwed into the ground by a wrench or planted in a prepared borehole with reduced disturbance of the surrounding earth. As another example, a borehole may be dug and the sensor device 100 may be placed therein. The borehole may be refilled after positioning the sensor device 100. Instead of using the spike 112, the housing 106 of the sensor device 100 can have a V or screw shape to facilitate planting into the ground surface 120 (protrusions can be formed on the outer wall of the housing 106 in the form of a helical screw).

In some cases, the sensor device 100 is partially buried beneath the ground surface 120, with a portion of the sensor device 100 protruding above the ground surface 120. In other cases, the sensor device 100 can be completely buried in the ground surface, up to a predetermined depth (as discussed above).

In some examples, the sensor components 102A and 102B are sensor chips. A sensor chip refers to an integrated circuit device that includes a substrate (e.g., semiconductor substrate) on which particle motion sensors can be provided. For example, the particle motion sensors that can be provided in the sensor chip 102A or 102B can include MEMS particle motion sensors, such as MEMS accelerometers. A MEMS particle motion sensor can include a micro element *(e.g.,* a micro cantilever) that is moveable in response to particle motion, where the movement of the micro element can be detected by a sensing element. In other examples, the sensor components 102A and 102B can include other types of particle motion sensors. It should be noted that the MEMS particle motion sensors do not have to be on the "chip," but that is an option. An example of a MEMS and electronics configuration is disclosed in U.S. Patent Application Publication No. 2013/0315036.

In some implementations, the particle motion sensors that are provided in the sensor component 102A or 102B can measure translational data in multiple directions, such as the *x, y* and *z* directions. Examples of such arrangements are shown in Figs. 2A and 2B, where the sensor component 102A or 102B includes a respective z sensor 202A or 202B (for measuring translational data along the z axis), a respective *x* sensor 204A or 204B (for measuring translational data along the *x* axis), and a respective *y* sensor 206A or 206B (for measuring translational data along the y axis).

In further examples, such as shown in Fig. 2C, the sensor component 102A or 102B can include just a respective x sensor 204A or 204B and a respective *y* sensor 206A or 206B. In the arrangement of Fig. 2C, a separate z sensor 210 can be provided for measuring translational data along the z direction. The z sensor 210 can be positioned in the middle between sensor components 102A and 102B. In other examples, the z sensor 210 can be positioned elsewhere, such as in either 102A or 102B. In some implementations, a pair of sensors (e.g., 204A and 204B, or 206A and 206B, or 202A and 202B) can be hardwired together to provide the sum and the difference as outputs. The sum can help reduce the noncorrelated noise (between the elements of a pair) and the difference provides a gradient.

In other implementations, the sensor component 102A can include particle motion sensors to measure in just the $x$ and y axes, while the sensor component 102B can include particle motion sensors to measure the $x,$ y and z axes, and vice versa

Note that the particle motion sensors in a given component (e.g., 102A) within the same sensor device 100 do not have to be orientated in the same direction as the other sensor component (e.g., 102B). If the relative angle between the sensor components 102A and 102B is known, then the measured data by the pair of particle motion sensors can be corrected using vector rotation.

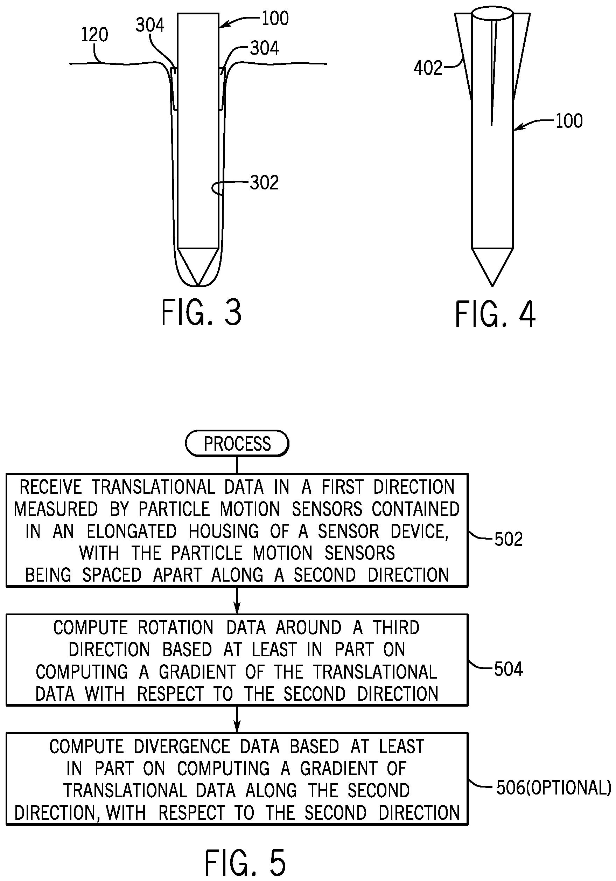

As shown in Fig. 3, a driving action on the sensor device 100 *(e.g., repeated hammer impacts on the sensor device 100)* drives the sensor device 100 into a hole 302 extending from the ground surface 120. The driving action on the sensor device 100 may have caused the hole 302 to widen near the earth surface 302. The widening of the hole 302 near the earth surface 300 may cause resonances in the sensor device 100 that may be observed in measured seismic survey data. Such resonances can be reduced by enhancing the coupling of the sensor device 100 with the surrounding earth. This can be achieved by inserting wedges 304 into a gap between the sensor device 100 and the surrounding earth.

In other implementations, as shown in Fig. 4, the sensor device 100 can be provided with wings or fins 402 (e.g., vertical fins), which allows the upper portion of the sensor device 100 to be coupled to the surrounding earth when the sensor device 100 is driven into the hole 302 (Fig. 3). In further implementations, a hole can be dug, the sensor device 100 is positioned in the hole, and the hole is backfilled to provide good coupling. In other implementations, a coupling device can first be planted or buried into the ground, and the sensor device 100 can then be engaged with the coupling device.

The rotation data in the three spatial axes ($k = x, y, z$) is given by:

$$R_k = \frac{1}{2}\left[\frac{\partial v_i}{\partial j} - \frac{\partial v_j}{\partial i}\right], \qquad \text{(Eq. 1)}$$

where $v_i$ represents the particle velocity along the $i$ ($i = x, y, z$) axis, and $v_j$ represents particle velocity along the $j$ ($j = x, y, z$) axis. In the foregoing nomenclature, the $i$ axis is orthogonal with respect to the $j$ axis, and both the $i$ and $j$ axes are orthogonal with respect to the $k$ axis. The gradient $\frac{\partial v_i}{\partial j}$ represents a spatial derivative of $v_i$ with respect to the $j$ axis, and the gradient $\frac{\partial v_j}{\partial i}$ represents a spatial derivative of $v_j$ with respect to the $i$ axis. The particle velocity measurements can be made at or just under the ground surface 120 (Fig. 1). At or just under the ground surface 120, the following relationships for deriving rotation data along the $x$ and $y$ axis may apply:

$$R_y = -\frac{\partial v_z}{\partial x} = +\frac{\partial v_x}{\partial z}, \qquad \text{(Eq. 2)}$$

$$R_x = \frac{\partial v_z}{\partial y} = -\frac{\partial v_y}{\partial z}, \qquad \text{(Eq. 3)}$$

where $v_x$ represents particle velocity along the $x$ direction, $v_y$ represents particle velocity along the $y$ direction, and $v_z$ represents particle velocity along the $z$ direction. This implies that the rotation components around a horizontal axis, $R_y$ or $R_x$, can be derived by measuring just one of the terms in the right hand side of Eq. 2 or 3.

Although reference is made to deriving rotation data based on measured velocities in the foregoing examples, it is noted that other types of translational data, including displacement or acceleration data, can be used for obtaining rotation data in a manner similar to that described in connection with Eqs. 2 and 3 above.

A characteristic of providing the sensor device 100 at the ground surface 120 (or free surface between the air and a solid or between the water and a solid) is that a spatial gradient and rotation become equivalent to one another, as expressed by Eq. 2 or 3.

By taking advantage of such characteristic when the sensor device is provided at the ground surface 120, measurements of the vertical gradient of horizontal translational data in a spike-shaped sensor device can be used to obtain the rotation data. A vertical gradient refers to a gradient taken with respect to the *z* axis. Horizontal translation data refers to translational data along the *x or y* axis. The vertical gradient of horizontal translational data can be expressed as $\frac{\delta v_x}{\delta z}$ or $\frac{\delta v_y}{\delta z}$, for example.

In the example arrangement of Fig. 1, the foregoing vertical gradients of horizontal translational data can be obtained using measurements of closely spaced apart x sensors 204A and 204B, or closely spaced apart y sensors 206A and 206B.

In addition to obtaining rotation data using measurements of translational data by particle motion sensors, divergence data can also be derived using the translational data, in accordance with further implementations.

The divergence of a wavefield, $\nabla \cdot V$, can be represented as:

$$\nabla \cdot V = \sum_{i=1}^{3} \frac{\partial v_i}{\partial i}. \qquad \text{(Eq. 4)}$$

In Eq. 4, *i* = (*x*, y, z) represent the three orthogonal axes. At the free surface, Eq. 4 is expressed as:

$$\nabla \cdot V = \frac{2\mu}{\lambda + 2\mu}\left(\frac{\partial v_x}{\partial x} + \frac{\partial v_y}{\partial y}\right) = -\frac{2\mu}{\lambda}\left(\frac{\partial v_z}{\partial z}\right), \qquad \text{(Eq. 5)}$$

Eq. 5 indicates that, at the free surface, the divergence of a wavefield, can be measured by just one partial derivative term $\left(\frac{\partial v_z}{\partial z}\right)$. In Eq. 5, the parameters $\mu$ and $\lambda$ are Lame parameters. The ratio of the Lame parameters $\mu$ and $\lambda$ is a function of the near-surface P- and S-wave velocities $\alpha$ and $\beta$:

$$\frac{\mu}{\lambda} = \frac{\beta^2}{\alpha^2 + \beta^2}. \qquad \text{(Eq. 6)}$$

The partial derivative in the right-hand side of Eqs. 2, 3, and 5 can be measured by differentiating measurements from closely spaced apart particle motion sensors, such as closely spaced apart particle motion sensors depicted in Fig. 1. In some examples, the particle motion sensors are spaced apart along the longitudinal axis 108 by a distance *D* that is less than or equal to about 0.3 times a wavelength of a target signal for measurement by the sensor device 100. In further examples, the particle motion sensors are spaced apart along the longitudinal axis 108 by a distance *D* that is less than or equal to about 0.1 times a wavelength of a target signal for measurement by the sensor device 100. Note that the foregoing distances *D* between the particle motion sensors are applicable to computing the rotation data according to Eqs. 2 and 3 and/or the divergence data according to Eq. 5.

To achieve greater accuracy in computing rotation data and/or divergence data as discussed above based on measured translational data, the particle motion sensors are selected or configured such that the impulse responses of the particle motions sensors within the same sensor device 100 are similar to one other to within a specified threshold difference of one other. This may be achieved by selecting matching pairs of particle motion sensors, or by applying calibration coefficients to measurement data acquired by the particle motion sensors.

Fig. 5 is a flow diagram of a process according to some implementations. The process of Fig. 5 can be performed by a computer system that receives measurements made by one or more sensor devices 100. For example, the computer system may be coupled to the one or more sensor devices 100 over the communications medium 103.

The computer system receives (at 502) translational data in a first direction (*e.g.,* x or y direction) measured by particle motion sensors contained in the elongated housing 106 (Fig. 1) of the sensor device 100. The particle motion sensors are spaced apart along a second, different direction (*e.g.,* z direction) along the longitudinal axis 108 (Fig. 1) of the elongated housing 106.

The computer system computes (at 504) rotation data around a third direction (*e.g.,* y or x direction) based at least in part on computing a gradient of the translational data with respect to the second direction, such as according to Eq. 2 or 3 set forth above.

In some examples, the computer system can also compute (at 506) divergence data based at least in part on computing a gradient of translational data along the second direction, with respect to the second direction, such as according to Eq. 5 above.

As shown in Fig. 2A or 2B, in some implementations, the sensor device 100 can include two sets (102A, 102B) of three orthogonally oriented particle motion sensors. This configuration allows computation of the two orthogonal rotation components, $R_x$ and $R_y$, around respective horizontal axes $x$ and $y$. The particle motion sensors of the set may be positioned with a very small vertical separation inside the sensor device 100 (as discussed above). The separation between the sets of particle motion sensors may not have to be the same for different directions (*e.g.*, x and y direction), so long as the different separations are known.

Using the sensor device 100 of Fig. 2A or 2B, the following data can be obtained: translational data (including $v_x$, $v_y$, $v_z$), rotation data (including $R_x$, $R_y$), and divergence data ($\nabla \cdot V$). With the sensor device 100 of Fig. 2C, the same types of data can be obtained, except the divergence data. The foregoing data can be transmitted over the communications medium 103 (Fig. 1) to a station.

In some examples, to obtain more accurate estimates of the translational data, translational data measurements in a given direction obtained by a pair of particle motion sensors for the given direction can be aggregated (*e.g.*, summed, averaged, etc.,). For example, as shown in Fig. 2A or 2B, the translational data measurements by the $z$ sensors 202A and 202B can be aggregated to obtain a better estimate of the wavefield in the $z$ direction, where this estimate is centered at the same depth as the obtained rotation data and divergence. Similarly, the translational data measurements by the $x$ sensors 204A and 204B can be aggregated (at a computer system) to obtain a better estimate of the wavefield in the x direction, and the translational data measurements by the $y$ sensors 206A and 206B can be aggregated (at the computer system) to obtain a better estimate of the wavefield in the $y$ direction.

In some examples, the separation ($D$ in Fig. 1) between the sets of particle motion sensors in the sensor device is between one centimeter and one meter. More specifically, the separation, $D$, can be between 5 centimeters and 50 centimeters, although other ranges are possible, such as on the order of centimeters.

The amplitude of the difference signal (difference between the translational data acquired by a first particle motion sensor and the translational data acquired by a second particle motion sensor, computed for determining the partial derivative in Eq. 2, 3, or 5) may be relatively small compared to the raw particle motion sensor output, because of the relatively small distance between the two particle motion sensors. To allow for an accurate determination of the rotation data and/or divergence data according to some implementations, the particle motion sensors used in a pair should be well matched in terms of phase and amplitude frequency response. In some examples, MEMS particle motion sensors may be well suited for some implementations, since they have a zero (or close to zero) phase response, and their amplitude response is flat at different frequencies.

In addition, MEMS particle motion sensors may be able to measure gravity, which can be used to calibrate the sensitivities of the MEMS particle motion sensors. As a result, use of MEMS particle motion sensors may lead to more accurate computation of partial derivatives of translational data, such as those computed in Eq. 2, 3, or 5.

Use of MEMS particle motion sensors may also allow the sensor device 100 to have a reduced size, as compared to a sensor device that uses another type of particle motion sensors, such as geophones. A smaller sensor device 100 is easier to deploy.

To improve the accuracy of divergence data obtained by differentiating closely spaced z particle motion sensors, such as according to Eq. 5, the z particle motion sensors (e.g., 202A and 202B in Fig. 2A or 2B) within the same sensor device 100 can be seismically decoupled. Seismically decoupling z particle motion sensors may be achieved by placing a damper between the two sensors, such as by placing a material, such as rubber or other dampening material, between the sensors that serve to attenuate the seismic signals that propagate in the longitudinal axis 108 (Fig. 1) of the sensor device 100. Also, to achieve improved accuracy in obtaining divergence data, the pair of z particle motion sensors in the sensor device 100 are matched or calibrated to have almost identical amplitude and phase responses.

As noted above, in some implementations, a sensor device 100 can include a sensing element (*e.g.*, a tilt meter) to measure a tilt of the sensor device 100 with respect to the $z$ axis (vertical axis). A deviation from the vertical axis can be measured in two directions using tilt meters, or can be derived from the DC component for the particle motion sensor measurements. If the sensor device 100 is not oriented vertically (*i.e.,* its longitudinal axis 108 is tilted from the z axis by more than a predefined angle), then measurements by the particle motion sensors of the sensor device 100 are corrected for the tilt.

Moreover, the orientation of the horizontal ($x$ or $y$) particle motions sensors with respect to geographical north (or any other horizontal azimuth) can be measured with a built in magnetometer or compass whose readings are recorded and transmitted once or multiple times during a survey. In other examples, the azimuth can be measured during or after planting of the sensor device 100, or derived from the measured translational data. The measured translation data from the horizontal particle motion sensors can be mathematically rotated using the measured azimuth angle.

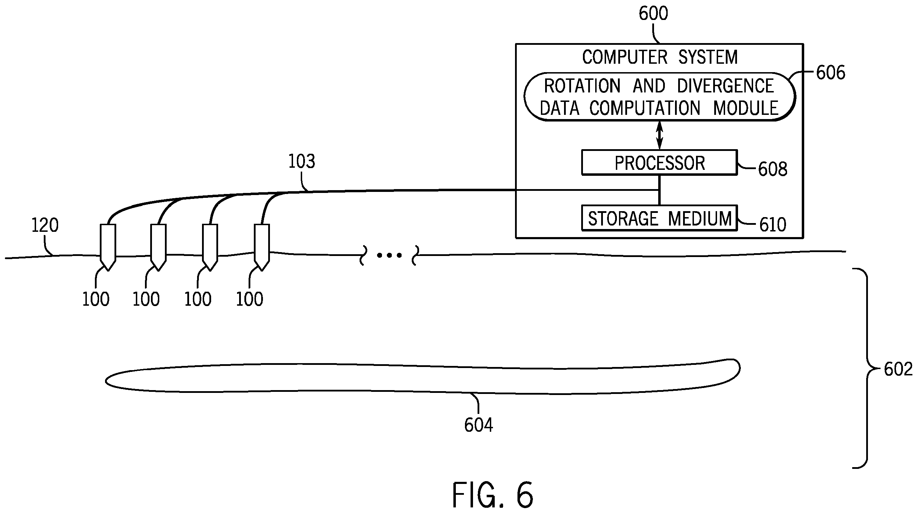

Fig. 6 is a schematic diagram of a land-based survey arrangement (including a seismic sensor system) that includes sensor devices 100 according to some implementations. In different examples, the sensor devices 100 can be deployed in a marine survey arrangement.

Measurements acquired by the sensor devices 100 are transmitted to a computer system 600, where the measurements are recorded (stored in a storage medium or storage media 610). In some examples, each sensor device 100 (or at least one of the sensor devices 100) can include the computer system 600, or at least one or more processors 608 and storage medium (or storage media) 610. The measurements are made by the sensor devices 100 in response to seismic waves produced by one or more seismic sources (not shown). The seismic waves are propagated into a subterranean structure 602, and reflected from a subterranean element 604 of interest. The reflected waves are detected by the sensor devices 100.

The computer system 600 includes a rotation and divergence data computation module 606, which can be implemented with machine-readable instructions that are executable on one or more processors 608. The rotation and divergence data computation module 606 can compute rotation data and divergence data as discussed above.

The processor(s) 608 can be coupled to the storage medium (or storage media) 610, which can store data, such as translational data received from the sensor devices 100.

The storage medium (or storage media) 610 can be implemented as one or more computer-readable or machine-readable storage media. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs); or other types of storage devices. Note that the instructions discussed above can be provided on one computer-readable or machine-readable storage medium, or can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the foregoing description, numerous details are set forth to provide an understanding of the subject disclosed herein. However, implementations may be practiced without some of these details, within the scope of the invention as defined by the appended claims. Other implementations may include modifications and variations from the details discussed above, within the scope of the invention as defined by the appended claims.

## Claims

**1.** A seismic sensor system comprising:

a seismic source configured to transmit impulses into a ground subsurface (602);
a sensor device (100) provided proximate the ground surface (120), the device comprising:

an elongated housing (106) having a longitudinal axis (108) and one end that is adapted to be input into the ground to form a connection between the ground and the elongated housing (106) so that seismic signals transmitted though the earth will be transmitted to the elongated housing (106); and
particle motion sensors (204A, 204B; 206A, 206B; 210)) within the elongated housing (106), the particle motion sensors (204A, 204B; 206A, 206B, 210) configured to measure translational data in a first (x; y) and third (z) direction along three orthogonal axes relative to the longitudinal axis (108) of the elongated housing (106) wherein the particle motion sensors (204A, 204B; 206A, 206B) configured to measure translational data in the first direction (x; y) are spaced apart along a second direction (y; x) along the three orthogonal axes and wherein the translational data measured in the first and third directions (x; y, z) corresponds at least partially to impulses produced by actuation of the seismic source;

a processor (608) configured to receive the translational data in the first direction (x; y) and the translational data in the third direction (z) and to calculate rotation data around the third direction (z) based on a gradient of the translational data in the first direction (x; y) with respect to the second direction (y; x) and rotation data around the first direction (x; y) based on a gradient of the translational data in the third direction (z) with respect to the second direction (y; x).

**2.** The seismic sensor system of claim 1, further comprising:
a memory device (610) in communication with the processor (608).

**3.** The seismic sensor system of claim 1, further comprising:
a power source in communication with the particle motion sensors (204A, 204B; 206A, 206B; 210).

4. The seismic sensor system of claim 1, wherein the elongated housing (106) comprises a hollow tubular structure, wherein the particle motion sensors (204A, 204B; 206A, 206B; 210) are located inside the hollow tubular structure.

5. The seismic sensor system of claim 4, wherein the hollow tubular structure includes protrusions in the form of a helical screw on an outside of the elongated housing (106).

6. The seismic sensor system of claim 4, wherein the hollow tubular structure includes protrusions on an outside of the housing (106) that form vertical fins (402) that extend in the first or second direction.

7. The seismic sensor system of claim 1, wherein the processor (608) is configured to process translational data collected in the second direction (y; x) with the calculated rotation information to reduce ground-roll noise.

8. A method of seismic surveying comprising:

placing a seismic sensor system at least partially into the ground surface (102), the seismic sensor system including a processor (608),
actuating a seismic source to transmit impulses into the ground subsurface;
receiving (502), by the seismic sensor system, translational data in a first direction (x; y) measured by particle motion sensors ((204A, 204B; 206B, 206B) contained in an elongated housing (106) of a sensor device (100) provided proximate the ground surface (102), wherein the particle motion sensors (204A, 204B; 206B, 206B) are spaced apart along a second, different direction (y; x) along a longitudinal axis (108) of the elongated housing, and receiving translational data in a third direction (z) measured by additional particle motion sensors (210) in the elongated housing (106), the translational data in the first (x; y) and third (z) directions corresponding at least partially to the produced impulses produced by the seismic source;
recording the translational data in the first direction (x; y) and the translational data in the third direction (z); and
calculating (504) rotation data around the third direction (z) based on a gradient of the translational data in the first direction (x; y) with respect to the second direction (y; z) and rotation data around the first direction (x; y) based on a gradient of the translational data in the third direction (z) with respect to the second direction (y; x).

9. The method of claim 8, further comprising processing translational data collected in the second direction (y; x) with the calculated rotation information to reduce noise.

10. The method of claim 8, wherein one end of the elongated housing (106) is sharp, configured to penetrate the ground surface (102).

11. The method of claim 8, where a processor and/or a tilt sensor device are provided inside the elongated housing (106).

**Patentansprüche**

1. Seismisches Sensorsystem, umfassend:

eine seismische Quelle, die dazu ausgelegt ist, Impulse in einen Geländeuntergrund (602) zu senden;
eine der Geländeoberfläche (120) benachbart bereitgestellte Sensorvorrichtung (100), wobei die Vorrichtung umfasst:

ein langgestrecktes Gehäuse (106) mit einer Längsachse (108) und einem Ende, das dazu eingerichtet ist, in das Gelände eingeführt zu werden, um eine Verbindung zwischen dem Gelände und dem langgestreckten Gehäuse (106) auszubilden, so dass durch die Erde gesendete seismische Signale an das langgestreckte Gehäuse (106) gesendet werden; und
Teilchenbewegungssensoren (204A, 204B; 206A, 206B; 210) innerhalb des langgestreckten Gehäuses (106), wobei die Teilchenbewegungssensoren (204A, 204B; 206A, 206B; 210) dazu ausgelegt sind, Translationsdaten in einer ersten (x; y) und dritten (z) Richtung entlang dreier orthogonaler Achsen relativ zur Längsachse (108) des langgestreckten Gehäuses (106) zu messen, wobei die Teilchenbewegungssensoren (204A, 204B; 206A, 206B), die dazu ausgelegt sind, Translationsdaten in der ersten (x; y) Richtung zu messen, entlang einer zweiten Richtung (y; x) entlang der drei orthogonalen Achsen voneinander beabstandet sind, und wobei die in der ersten und dritten Richtung (x; y, z) gemessenen Translationsdaten wenigstens teilweise durch Betätigung der seismischen Quelle erzeugten Impulsen entsprechen;

einen Prozessor (608), der dazu ausgelegt ist, die Translationsdaten in der ersten Richtung (x; y) und die Translationsdaten in der dritten Richtung (z) zu empfangen, und Rotationsdaten um die dritte Richtung (z) basierend auf einem Gradienten der Translationsdaten in der ersten Richtung (x; y) in Bezug auf die zweite Richtung (y; x) und Rotationsdaten um die erste Richtung (x; y) basierend auf einem Gradienten der Translationsdaten in der dritten Richtung (z) in Bezug auf die zweite Richtung (y; x) zu berechnen.

2. Seismisches Sensorsystem nach Anspruch 1, ferner umfassend:
eine Speichervorrichtung (610) in Kommunikation mit dem Prozessor (608).

3. Seismisches Sensorsystem nach Anspruch 1, ferner umfassend:
eine Energiequelle in Kommunikation mit den Teilchenbewegungssensoren (204A, 204B; 206A, 206B; 210).

4. Seismisches Sensorsystem nach Anspruch 1, wobei das langgestreckte Gehäuse (106) eine hohle röhrenförmige Struktur umfasst, wobei sich die Teilchenbewegungssensoren (204A, 204B; 206A, 206B; 210) im Innern der hohlen röhrenförmigen Struktur befinden.

5. Seismisches Sensorsystem nach Anspruch 4, wobei die hohle röhrenförmige Struktur Vorsprünge in Form einer Spiralschraube an einer Außenseite des langgestreckten Gehäuses (106) umfasst.

6. Seismisches Sensorsystem nach Anspruch 4, wobei die hohle röhrenförmige Struktur Vorsprünge an einer Außenseite des Gehäuses (106) umfasst, die vertikale Rippen (402) ausbilden, die sich in der ersten oder zweiten Richtung erstrecken.

7. Seismisches Sensorsystem nach Anspruch 1, wobei der Prozessor (608) dazu ausgelegt ist, in der zweiten Richtung (y; x) gesammelte Translationsdaten mit den berechneten Rotationsinformationen zu verarbeiten, um "Ground-Roll"-Rauschen zu reduzieren.

8. Verfahren zur seismischen Erkundung, umfassend:

Platzieren eines seismischen Sensorsystems wenigstens teilweise in die Geländeoberfläche (102), wobei das seismische Sensorsystem einen Prozessor (608) umfasst,
Betätigen einer seismischen Quelle, um Impulse in den Geländeuntergrund zu senden;
Empfangen (502), durch das seismische Sensorsystem, von Translationsdaten in einer ersten Richtung (x; y), die von Teilchenbewegungssensoren (204A, 204B; 206B, 206B) gemessen werden, welche in einem langgestreckten Gehäuse (106) einer der Geländeoberfläche (102) benachbart bereitgestellten Sensorvorrichtung (100) enthalten sind, wobei die Teilchenbewegungssensoren (204A, 204B; 206B, 206B) entlang einer zweiten, anderen Richtung (y; x) entlang einer Längsachse (108) des langgestreckten Gehäuses beabstandet sind, und Empfangen von Translationsdaten in einer dritten Richtung (z), die von zusätzlichen Teilchenbewegungssensoren (210) im langgestreckten Gehäuse (106) gemessen werden, wobei die Translationsdaten in der ersten (x; y) und dritten (z) Richtung wenigstens teilweise den von der seismischen Quelle erzeugten Impulsen entsprechen;
Aufzeichnen der Translationsdaten in der ersten Richtung (x; y) und der Translationsdaten in der dritten Richtung (z); und
Berechnen (504) von Rotationsdaten um die dritte Richtung (z) basierend auf einem Gradienten der Translationsdaten in der ersten Richtung (x; y) in Bezug auf die zweite Richtung (y; z) und von Rotationsdaten um die erste Richtung (x; y) basierend auf einem Gradienten der Translationsdaten in der dritten Richtung (z) in Bezug auf die zweite Richtung (y; x).

9. Verfahren nach Anspruch 8, ferner umfassend ein Verarbeiten von in der zweiten Richtung (y; x) gesammelten Translationsdaten mit den berechneten Rotationsinformationen, um Rauschen zu reduzieren.

10. Verfahren nach Anspruch 8, wobei ein Ende des langgestreckten Gehäuses (106) scharf ist, dazu ausgelegt die Geländeoberfläche (102) zu durchdringen.

11. Verfahren nach Anspruch 8, wobei ein Prozessor und/oder eine Neigungssensorvorrichtung im Innern des langgestreckten Gehäuses (106) bereitgestellt sind.

**Revendications**

1. Système de capteur sismique comprenant :

   une source sismique conçue pour transmettre des impulsions dans une sous-surface du sol (602) ;
   un dispositif de capteur (100) prévu à proximité de la surface du sol (120), le dispositif comprenant :

   un boîtier allongé (106) présentant un axe longitudinal (108) et une extrémité qui est adaptée à être introduite dans le sol pour former une liaison entre le sol et le boîtier allongé (106) de manière à ce que les signaux sismiques transmis à travers la terre soient transmis au boîtier allongé (106) ; et
   des capteurs de mouvement de particules (204A, 204B ; 206A, 206B ; 210) à l'intérieur du boîtier allongé (106), les capteurs de mouvement de particules (204A, 204B ; 206A, 206B, 210) étant conçus pour mesurer des données de translation dans une première (x ; y) et une troisième (z) direction le long de trois axes orthogonaux par rapport à l'axe longitudinal (108) du boîtier allongé (106), dans lequel les capteurs de mouvement de particules (204A, 204B ; 206A, 206B) conçus pour mesurer des données de translation dans la première direction (x ; y) sont espacés le long d'une deuxième direction (y ; x) le long des trois axes orthogonaux et dans lequel les données de translation mesurées dans les première et troisième directions (x ; y, z) correspondent au moins partiellement à des impulsions produites par l'actionnement de la source sismique ;
   un processeur (608) configuré pour recevoir les données de translation dans la première direction (x ; y) et les données de translation dans la troisième direction (z) et pour calculer des données de rotation autour de la troisième direction (z) sur la base d'un gradient des données de translation dans la première direction (x ; y) par rapport à la deuxième direction (y ; x) et des données de rotation autour de la première direction (x ; y) sur la base d'un gradient des données de translation dans la troisième direction (z) par rapport à la deuxième direction (y ; x).

2. Système de capteur sismique selon la revendication 1, comprenant en outre :
   un dispositif à mémoire (610) en communication avec le processeur (608).

3. Système de capteur sismique selon la revendication 1, comprenant en outre :
   une source d'alimentation électrique en communication avec les capteurs de mouvement de particules (204A, 204B ; 206A, 206B ; 210).

4. Système de capteur sismique selon la revendication 1, dans lequel le boîtier allongé (106) comprend une structure tubulaire creuse, dans lequel les capteurs de mouvement de particules (204A, 204B ; 206A, 206B ; 210) sont situés à l'intérieur de la structure tubulaire creuse.

5. Système de capteur sismique selon la revendication 4, dans lequel la structure tubulaire creuse comprend des protubérances sous la forme d'une vis hélicoïdale sur un extérieur du boîtier allongé (106).

6. Système de capteur sismique selon la revendication 4, dans lequel la structure tubulaire creuse comprend des protubérances sur un extérieur du boîtier (106) qui forment des ailettes verticales (402) qui s'étendent dans la première ou la deuxième direction.

7. Système de capteur sismique selon la revendication 1, dans lequel le processeur (608) est configuré pour traiter les données de translation collectées dans la deuxième direction (y ; x) avec les informations de rotation calculées pour réduire le bruit de roulement au sol.

8. Procédé destiné au relevé sismique comprenant :

   le placement d'un système de capteur sismique au moins partiellement dans la surface du sol (102), le système de capteur sismique comportant un processeur (608),
   l'actionnement d'une source sismique pour transmettre des impulsions dans la sous-surface du sol ;
   la réception (502), par le système de capteur sismique, des données de translation dans une première direction (x ; y) mesurées par des capteurs de mouvement de particules (204A, 204B ; 206B, 206B) contenus dans un boîtier allongé (106) d'un dispositif de capteur (100) prévu à proximité de la surface du sol (102), dans lequel les capteurs de mouvement de particules (204A, 204B ; 206B, 206B) sont espacés le long d'une deuxième direction différente (y ; x) le long d'un axe longitudinal (108) du boîtier allongé et la réception des données de translation dans une troisième direction (z) mesurées par des capteurs de mouvement de particules supplémentaires (210) dans le boîtier allongé (106), les données de translation dans les première (x; y) et troisième (z) directions correspondant au moins partiellement aux impulsions produites par la source sismique ;

l'enregistrement des données de translation dans la première direction (x; y) et des données de translation dans la troisième direction (z) ; et

le calcul (504) des données de rotation dans la troisième direction (z) sur la base d'un gradient des données de translation dans la première direction (x ; y) par rapport à la deuxième direction (y ; z) et des données de rotation autour de la première direction (x ; y) sur la base d'un gradient des données de translation dans la troisième direction (z) par rapport à la deuxième direction (y ; x).

9. Procédé selon la revendication 8, comprenant en outre le traitement des données de translation collectées dans la deuxième direction (y ; x) avec les informations de rotation calculées pour réduire le bruit.

10. Procédé selon la revendication 8, dans lequel une extrémité du boîtier allongé (106) est pointue, conçue pour pénétrer dans la surface du sol (102).

11. Procédé selon la revendication 8, où un processeur et/ou un dispositif de capteur d'inclinaison sont prévus à l'intérieur du boîtier allongé (106).

FIG. 1

FIG. 2A

FIG. 2B

FIG. 2C

FIG. 3

FIG. 4

PROCESS

RECEIVE TRANSLATIONAL DATA IN A FIRST DIRECTION MEASURED BY PARTICLE MOTION SENSORS CONTAINED IN AN ELONGATED HOUSING OF A SENSOR DEVICE, WITH THE PARTICLE MOTION SENSORS BEING SPACED APART ALONG A SECOND DIRECTION ⟍502

COMPUTE ROTATION DATA AROUND A THIRD DIRECTION BASED AT LEAST IN PART ON COMPUTING A GRADIENT OF THE TRANSLATIONAL DATA WITH RESPECT TO THE SECOND DIRECTION ⟍504

COMPUTE DIVERGENCE DATA BASED AT LEAST IN PART ON COMPUTING A GRADIENT OF TRANSLATIONAL DATA ALONG THE SECOND DIRECTION, WITH RESPECT TO THE SECOND DIRECTION ⟍506(OPTIONAL)

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20110042276
- US 4300220 A
- US 20130315036